# EUROPEAN PATENT APPLICATION

(11) **EP 0 562 729 A1**
(43) Date of publication of application: **29.09.1993**
(21) Application number: 93301684.2
(22) Date of filing: 05.03.1993
(51) Int. Cl.: A23L 1/16

(54) **Microwavable pasta**

(30) Priority: 09.03.1992 US 848572
(71) Applicant: CPC INTERNATIONAL INC., Englewood Cliffs New Jersey 07632-9976 (US)
(72) Inventor: Bernardini, Deborah L., Mahopac, New York 10541 (US); Merolla, Thomas V., Millburn, New Jersey 07041 (US); Meyers, Edward J., Jr., Roselle Park, New Jersey 07204 (US)
(74) Representative: Gaunt, Robert John

(57) **Abstract**

A dry pasta product designed to be prepared in a microwave oven is claimed. The pasta is prepared in a period of less than 10 minutes, and the resulting product contains no excess water that requires draining, while exhibiting an acceptable firm texture.

## Description

### Technical Field

The present invention relates to a dry pasta product designed to be prepared in a microwave oven in a period of less than 10 minutes. The cooked pasta product contains no excess liquid that requires draining and exhibits an acceptable firm texture.

### Background of the Invention

Conventional pasta products are manufactured by extrusion of an uncooked, aqueous flour paste into desired shapes and subsequently dried for an extended period of time to provide a dried, uniform product without stress cracks or other defects. Such conventional pasta products require substantial cooking time, from about 10 to 20 minutes in boiling water, in order to hydrate and gelatinize the starch to provide a cooked product. Prior to cooking, the protein and starch of the product remain essentially in their natural states and no denaturation of the protein or gelatinization of the starch occurs until the cooking takes place.

There have been various proposals for making quick cooking pasta products, some of such products even being suggested for use in the microwave. However, when conventional or previously known quick cooking pasta products are cooked in the microwave, the resulting product has an unacceptable texture. It is too rubbery, too soft and has unacceptable levels of starch loss.

In U.S. Patent no. 4,973,487 to Wyss et al., an improved quick cooking thin wall dry uncooked macaroni is disclosed and claimed which utilizes 0.5 to 5.0% of dried egg white solids. The dried egg white solids must critically have a pH value within the range of from 6.75 to 7.25 and a solubility greater than 90%, with preferably a normal ovomucin content. The preferable method of cooking this thin walled product is by microwave.

In U.S. Patent no. 4,423,082 to Bauernfeid, a process for manufacturing quick cooking pasta products is disclosed wherein the pasta components are initially heated to a temperature above 235°F under specified conditions, cooled to a temperature of 200°F and then extruded. The extruded pasta is rapidly dried to provide a quick cooking high quality pasta products without checks, blisters or stress cracks. The improved quick cooking pasta products can be rehydrated in a microwave oven.

### Summary of the Invention

The present invention relates to an improved microwavable pasta product which is produced by incorporating liquid egg into the pasta product and limiting the thickness of the product to about 0.070 inches. The pasta produced in accordance herewith can be cooked in a microwave oven in the presence of a liquid for less than 10 minutes and result in an acceptably textured pasta product which requires no draining.

### Detailed Description

The present invention relates to a microwavable pasta product which can be cooked in a microwave oven for a period of less than 10 minutes and which exhibits acceptable texture, i.e. similar to that of a conventional pasta which has been cooked in boiling water. It has been found that the unique combination of adding liquid egg to the standard combination of flour and water to produce a pasta, combined with extruding the pasta to a wall thickness of less than 0.070 inches results in a product which has an acceptable texture when cooked in a microwave oven. The addition of a protein in the form of liquid egg gives the product a better texture in that it binds the starch, and therefore the starch does not separate out into the water as in conventional pasta products which do not contain added proteins.

The flour component can be chosen from any of the well known flours used to produce conventional pasta products, such as, but not limited to, wheat flour, semolina, durum, konjac, farina or corn flours or any combination thereof.

The liquid egg which is added to the pasta product is chosen from the group consisting of whole eggs, egg whites, egg substitutes and combinations thereof, with whole eggs being the preferred choice. The liquid egg is added to the pasta at levels such that the final pasta product comprises from about 0.5% to about 7.0% by weight, dried egg solids with the optimum results exhibited at levels of about 2.0% to about 5.5% by weight dried egg solids.

In order for the pasta product to rehydrate to an acceptable texture and not require draining, the pasta product must have a moisture content of from about 3.0 to about 12% by weight of the final product. This is the moisture content which is measured after the final drying step in the production process. The optimum results are obtained when the final product has a moisture content of from about 7.0% to about 11.0% by weight.

The optimum microwavable pasta product results when the wall thickness of the product is kept relatively thin i.e. from about 0.015 to about 0.070 inches in thickness. The actual desired thickness of the final product varies from product to product, with thinner walls being preferred for short goods, preferably in the range of about 0.020 to 0.030, as compared with the standard wall thickness for short goods which is in the area of 0.032 to 0.040 inches. The long goods exhibit their optimum performance at thicknesses greater than that of the short goods, more preferably from .050 to .055 as compared with the standard thickness of a conventional long good of .080 inches.

The following examples illustrates certain embodiments of the present invention. The examples are not meant to limit the invention beyond what is claimed below.

### EXAMPLE 1

Thin wall elbow pasta (0.017 inches) was produced with varying the level of protein added. The pasta dough was made by taking 5000 grams of semolina and adding enough water to the semolina to get a pasta dough with a moisture content of 30%. Thereafter, the individual samples were prepared by adding the specified amount of liquid egg white to the dough.

| Sample | % by Weight Liquid Egg White |
|---|---|
| Control | 0.0 |
| 1 | 2.0 |
| 2 | 4.0 |
| 3 | 6.0 |

20 grams of each sample of pasta was added to 100 ml of water. They were then cooked individually for four (4) minutes on high in a 650 watt microwave. Each sample was stirred after two (2) minutes.

| Sample | Results |
|---|---|
| Control | Cooked; texture starchy and soft |
| 1 | Cooked; texture acceptable and firm |
| 2 | Cooked; very firm texture |
| 3 | Cooked; very firm and rubbery texture |

### EXAMPLE 2

A thin wall pasta product (0.017 inches) was produced using various types and various levels of added proteins as shown below:

| Sample | Description |
|---|---|
| 1 | Control - no added protein |
| 2 | 1% egg white |
| 3 | 2% egg white |
| 4 | 1% gluten |
| 5 | 2% gluten |
| 6 | 2% egg white + 2% gluten |
| 7 | 1% egg white + 2% gluten |
| 8 | 2% whole egg |

The pasta was prepared by first combining the ingredients in a laboratory scale paddle type mixer: 5000 grams of semolina were added to the mixer, and then water was added to bring the final moisture content of the pasta dough to 30%. The above-referenced quantity of protein, egg white and/or gluten, was added to form each individual sample. The dough was then transferred to the mixing chamber of a DeMaco laboratory pasta extruder. The product was mixed for 5 minutes in the extruder mixing chamber and then extruded under vacuum through a thin wall elbow die, cut to size, collected on screens and dried in a laboratory batch drier for 7.5 hours at 120°F to a final moisture of 10%.

| Sample | Results |
|---|---|
| 1 | Soft and starchy |
| 2 | Acceptable texture |
| 3 | Firmer than Sample 2 |
| 4 | Soft |
| 5 | Soft and gummy |
| 6 | Firmer but gummy |
| 7 | Softer than Sample 6 |
| 8 | Same as sample 5 |

## Claims

1. A microwavable pasta product which comprises flour, water and liquid egg and which has a thickness of from about 0.015 to about 0.070 inches.

2. The microwavable pasta product of claim 1 wherein the flour is chosen from the group consisting of semolina, durum, konjac, farina, or corn flours or combinations thereof.

3. The microwavable pasta product of claim 1 wherein the liquid egg is chosen from the group consisting of whole eggs, egg whites, egg white substitutes and combinations thereof.

4. The microwavable pasta product of claim 1 wherein the product is short goods.

5. The microwavable pasta product of claim 1 which has a moisture content of from about 3.0 to about 10% by weight of the final product.

6. The microwavable pasta product of claim 5 wherein the moisture content is from about 7.0 to about 11% by weight of the final product.

7. The microwavable pasta product of claim 1 which comprises from about 0.5% to about 6.5% by weight egg solids.

8. The microwavable pasta product of claim 7 which comprises about 2.0% by weight egg solids.
